# EUROPÄISCHE PATENTANMELDUNG

(11) **EP 1 375 953 A2**
(43) Veröffentlichungstag der Anmeldung: **02.01.2004**
(21) Anmeldenummer: 03012591.8
(22) Anmeldetag: 03.06.2003
(51) Int. Cl.: F16D 65/12

(54) **Mehrteilige Bremsscheibe**

(30) Priorität: 12.06.2002 DE 10226197; 02.06.2003 DE 10324816
(71) Anmelder: Continental Teves AG & Co. oHG, 60488 Frankfurt (DE)
(72) Erfinder: Bauer, Jürgen, 65187 Wiesbaden (DE); Hendrich, Uwe, 61449 Steinbach (DE)
(74) Vertreter: Portwich, Peter

(57) **Zusammenfassung**

Die Erfindung betrifft eine aus mehreren Teilen bestehende Bremsscheibe strich wobei ein Reibring (1) mit einem Tragteil (2) lösbar gekoppelt ist.

Aufgabe der Erfindung ist es eine neuartige, aus mehreren Teilen bestehende Bremsscheibe anzugeben, die einfach zusammen zu bauen ist, platzsparend aufgebaut ist und kostengünstig hergestellt werden kann.

Die Erfindung besteht im Prinzip darin, einen Befestigungsring (5) oder zwei Befestigungsringe (4,5) mit einer Außenverzahnung (6) zu versehen, die mit einer Innenverzahnung (16) des Reibringes (1) zusammenwirkt. Damit kann die bekannte Außenverzahnung an dem Tragteil entfallen, wodurch in das Tragteil sehr viel einfacher aufgebaut ist und hergestellt werden kann. Im einfachsten Fall besitzt der Befestigungsring (5) als Außenverzahnung einen einzigen Vorsprung (6), welcher auf die ihm benachbarten Zähne (16) des Reibringes (1) einwirkt und wodurch tangentiale Kräfte zwischen den genannten Bauelementen übertragen werden. Dieser Vorsprung kann ausgehend von dem Reibring in radialer oder axialer Richtung weisen und so in den Zwischenraum (3) zwischen zwei Zähnen (16) des Reibringes eingreifen. Um das Tragteil (2) in axialer Richtung zu sichern kann sich dieses mit einem Ansatz (17) ebenso wie der hinsichtlich der Bremsscheibe gegenüberliegende Befestigungsring (5) seitlich an dem Reibring bzw. deren Innenverzahnung abstützen, wobei zwischen den Zähnen verlaufende Schrauben (7) den Befestigungsring und das Tragteil gegen die Seiten des Reibringes (1) pressen.

## Beschreibung

Die Erfindung betrifft eine mehrteilige Bremsscheibe mit einem Bremsscheibentopf und einem daran zu befestigenden Reibring, wobei die Übertragung eines Bremsmoments zuverlässig möglich ist.
Derartige mehrteilige Bremsscheibenanordnungen mit einem Bremsscheibentopf und einem Reibring sind aus dem Stand der Technik bekannt. Hierbei ist häufig zwischen dem Bremsscheibentopf und dem Reibring eine formschlüssige Verzahnung ausgebildet, um auftretende Bremsmomente übertragen zu können. Es gibt auch Ausführungsformen, bei denen in den Bremsscheibentopf gleichzeitig Komponenten des Radlagers integriert sind. Nachteilig bei diesen Bauformen erweist der große bauliche Aufwand zur Realisierung eine zuverlässigen Verbindung von Reibring und Bremsscheibentopf. Eine wirtschaftliche Produktion der bekannten Bauformen ist damit häufig ausgeschlossen bzw. nur bei sehr großen Stückzahlen möglich.

Bekanntlich sind Bremsscheiben in ihrem mit den Bremsklötzen in Kontakt tretenden Bereich erheblichen mechanischen Belastungen und Temperaturbelastungen ausgesetzt. Diese Belastungen dürfen zu keiner dauerhaften Beschädigung oder Formänderung der Bremsscheibe führen. Diese Forderungen müssen nicht an den als Tragteil dienenden Abschnitt der Bremsscheibe gestellt werden, welcher im wesentlichen dazu dient, die Bremsscheibe an dem Fahrzeug zu befestigen. Bei diesen Abschnitt wird hingegen gefordert, daß das hierzu verwendete Material haltbar ist und leicht in eine komplizierte geometrische Form gebracht werden kann. Man ist daher vielfach dazu übergegangen, Bremsscheiben aus zwei miteinander verbundenen Teilen aus unterschiedlichen Material aufzubauen, wobei ein Reibring mit einem Tragteil verbunden wird.

Eine derartige Bremsscheibe ist aus der DE-AS 2 013535 bekannt. Bei der bekannten Bremsscheibe ist ein Reibring aus einem Gußmaterial mit einem schüsselförmigen Halteteil aus Blech verbunden. Das Halteteil wird an der Nabe eines Fahrzeugrades festgeschraubt und trägt den Reibring. Derartige zusammengesetzte Bremsscheiben haben den Vorteil, daß das Halteteil dünner und leichter ausgeführt sein kann als bei einer einteiligen Bremsscheibe, die vollständig gegossen ist. Außerdem treten bei gattungsgemäßen zweiteiligen Bremsscheiben unter starker Wärmeeinwirkung keine nachteiligen Verwerfungen des Reibringes auf, da das Halteteil aufgrund seiner Elastizität wärmebedingte Verformungen auffangen kann.

Eine weitere Bremsscheibe ist beispielsweise in der DE 44 19 757 A1 beschrieben. Hierbei wird der Reibring mittels Umformung des metallischen Halteteiles mit diesem formschlüssig verbunden. Im Prinzip ist die bekannte Bremsscheibe dadurch ausgezeichnet, daß auf den Umfang des Halteteils verteilte Ausprägungen vorgesehen sind, die mittels eines von innen angreifenden Prägewerkzeugs durch eine einfache radial von innen nach außen gerichtete Bewegung des Prägewerkzeugs erzeugt werden können.

Weiterhin ist man dazu übergegangen, daß Tragteil und den Bremsring mit einander lösbar zu verbinden. Aus der WO 02/01088 ist beispielsweise eine Bremsscheibe bekannt, bei der das Tragteil mit einer Außenverzahnung versehen ist, welche in die Innenverzahnung eines Reibringes eingreift. Um das Tragteil gegenüber dem Reibring in axialer Richtung zu sichern sind Verbindungselemente vorgesehen, welche die Außenverzahnung des Tragteils durchdringen und das Tragteil in axialer Richtung über sich tangential über die Innenverzahnung der Bremsscheibe erstreckende Scheiben abstützen. Nachteilig hierbei ist, daß das Tragteil auf diese Weise eine recht komplizierte Form bekommt und die Zähne des Tragteils durch die zur Befestigung dienenden Durchgangslöcher geschwächt werden. In einem Ausführungsbeispiel dieses Dokuments ist gezeigt, daß zur Verbindung zwischen Tragteil und Bremsscheibe auch Befestigungsringe eingesetzt werden können, welche die oben beschriebenen Scheiben ersetzen.

Aus der DE-OS 19606737 ist es bekannt das Tragteil mit dem Reibring mittels Koppelelementen zu verbinden, die sich in einander zugeordneten Ausnehmungen in dem Reibring und dem Tragteil abstützen. Um die Koppelelemente am Herausfallen aus den Ausnehmungen zu hindern werden diese in axialer Richtung durch die Ausnehmungen übergreifende Scheiben gesichert, welche die genannten Elemente durchdringende Schrauben in axialer Richtung zusammenhalten. Nachteilig hierbei ist, daß die einzelnen Koppelelemente in die Ausnehmungen eingefügt werden müssen, wobei diese Elemente noch durch die Durchgangslöcher zur axialen Sicherung geschwächt werden.

Die vorliegende Erfindung geht daher aus von einer Bremsscheibe der sich aus dem Oberbegriff des Anspruchs 1 ergebenden Gattung. Aufgabe der Erfindung ist es eine neuartige, aus mehreren Teilen bestehende Bremsscheibe anzugeben, die einfach zusammen zu bauen ist, platzsparend aufgebaut ist und kostengünstig hergestellt werden kann.

Die Aufgabe wird durch die sich aus dem kennzeichnenden Teil des Anspruchs 1 ergebenden Merkmalskombination gelöst. Die Erfindung besteht im Prinzip also darin, den Befestigungsring oder die Befestigungsringe mit einer Außenverzahnung zu versehen, die mit der Innenverzahnung des Reibringes zusammenwirkt. Damit kann die Außenverzahnung an dem Tragteil entfallen, welches somit sehr viel einfacher aufgebaut ist und hergestellt werden kann. Im einfachsten Fall besitzt der Befestigungsring als Außenverzahnung einen einzigen Vorsprung, welcher auf die im benachbarten Zähne des Reibringes einwirkt und wodurch tangentiale Kräfte zwischen den genannten Bauelementen übertragen werden. Dieser Vorsprung kann ausgehend von dem Reibring in radialer oder axialer Richtung weisen und so in den Zwischenraum zwischen zwei Zähnen des Reibringes eingreifen. Um das Tragteil in axialer Richtung zu sichern kann sich dieses mit seinem Ansatz ebenso wie der hinsichtlich des Reibringes gegenüberliegende Befestigungsring seitlich an dem Reibring in bzw. dessen Innenverzahnung abstützen, wobei zwischen den Zähnen verlaufende Schrauben den Befestigungsring und das Tragteil gegen die Seiten des Reibringes pressen.

In Weiterbildung der Erfindung empfiehlt es sich zwei hinsichtlich der Bremsscheibe einander gegenüberliegende Befestigungsringe vorzusehen. Da die Befestigungsringe aus Blech gestanzt werden und somit nur eine begrenzte Stärke haben läßt sich hierdurch die zu übertragende Kraft auf die beiden Befestigungsringe verteilen.

Eine bessere Kraftverteilung auf die Befestigungsringe erhält man dadurch, daß an jedem Befestigungsring mehrere Vorsprünge vorgesehen sind, die sich radial nach außen erstrecken, wodurch man die erläuterte Außenverzahnung der Befestigungsringe erhält.

Bei der erfindungsgemäßen Bremsscheibe kann der Reibring unlösbar oder lösbar mit dem Tragteil verbunden sein. Strebt man eine lösbare Verbindung an, so empfiehlt sich in Weiterbildung der Erfindung die Verwendung von Schraubverbindungen, die die Befestigungsringe bzw. den Befestigungsring und den Ansatz des Tragteils gegen die Seitenflächen der Innenverzahnung des Reibringes pressen und dabei gleichzeitig noch das Tragteil in axialer Richtung sichern. Da sich die Reibringe bzw. der Reibring und der Ansatz an den beiden einander gegenüberliegenden Seiten der Bremsscheibe bzw. von deren Verzahnung abstützten und der Befestigungsring in Drehrichtung gegenüber der Bremsscheibe gesichert ist empfiehlt es sich dabei die Schraubverbindungen hinsichtlich der Bremsscheibe über die Freiräume zwischen deren Zähnen zu führen. Hierdurch tritt keine Schwächung für die Zähne der Bremsscheibe ein.

Um Bauraum zu sparen und um eine radialer Bewegung der Befestigungsringe gegenüber der Bremsscheibe zu verhindern empfiehlt es sich in Weiterbildung der Erfindung die Seitenflächen der Zähne jeweils mit einer Stufe zu versehen. Dabei stützen sich die Befestigungsringe in radialer Richtung an den der Umfangsfläche der Befestigungsringe zugewandten Flächen der Stufen ab. Die axialer Bewegung der Befestigungsringe wird durch die sich radial erstreckenden Flächen der Stufen verhindert, gegen welche die Befestigungsringe durch die Verschraubung gepreßt werden.

Es besteht die Möglichkeit das Tragteil mit seinem Ansatz an der Außenseite des zugeordneten Befestigungsringes zu befestigen. Hierzu durchdringt in die Schraubverbindung die Durchgangslöcher des Ansatzes nach oder vor den entsprechenden Durchgangslöchern der beiden Befestigungsringe. Um aber eine Zentrierung des Ansatzes und damit des Tragteils gegenüber der Bremsscheibe zu ermöglichen empfiehlt es sich in Weiterbildung der Erfindung den Ansatz zwischen den beiden Befestigungsringen in dem Innenraum der Bremsscheibe anzuordnen. Dabei wird der Außendurchmesser des als Topf ausgestalteten Tragteils kleiner gewählt als der Innendurchmesser des zugeordneten Befestigungsringes, so daß das bodenseitige Ende des topfförmigen Tragteils durch den ersten Befestigungsring radial nach außen ragen kann. Um eine optimale Zentrierung zu erreichen empfiehlt sich dabei weiterhin, daß die freien Enden der Zähne des Reibringes im wesentlichen tangential verlaufende Endflächen besitzen, die an die Außenfläche des Ansatzes angrenzen. Damit kann sich der Ansatz des Topfes an den seinem Außenumfang gegenüber liegenden Endflächen der Zähne in radialer Richtung abstützten, wodurch er in seiner radialen Lage zentriert wird.

Es ist in Weiterbildung der Erfindung aber auch möglich den Ansatz des Tragteils mit dem zugeordneten Befestigungsringe einstückig zu vereinen, so daß Tragteil und Befestigungsring eine Einheit bilden.

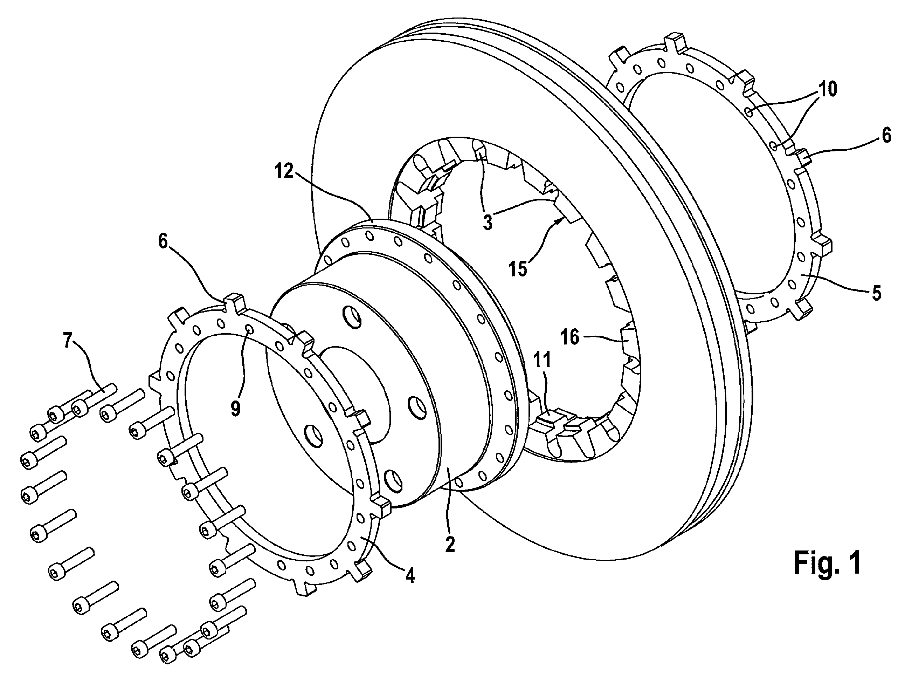

Ein Ausführungsbeispiel der Erfindung wird nachfolgend anhand der Zeichnung erläutert. Darin zeigt
Figur 1 in auseinander gezogener Darstellung eine erste Ausführungsform des Ausführungsbeispiels

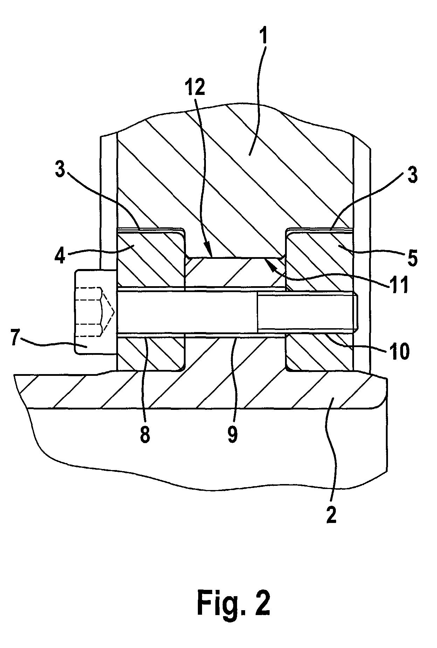

Figur 2 in geschnittener Darstellung einen Ausschnitt des Ausführungsbeispiels nach Figur 1

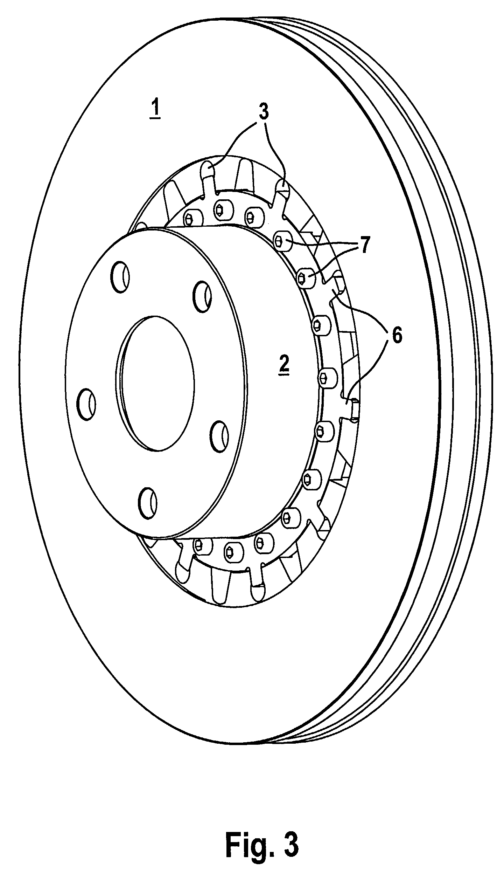

Figur 3 in perspektivischer Ansicht das Ausführungsbeispiel nach Figur 1 und
Figur 4 in auseinander gezogener Darstellung eine geänderte Anordnung der Bauelemente nach Figur 1

Die erfindungsgemäße mehrteilige Bremsscheibe zeigt eine Möglichkeit auf, einen Reibring 1 mit einem als Bremsscheibentopf ausgestalteten Tragteil 2 fertigungstechnisch einfach zu verbinden. Die Übertragung des Bremsmomentes erfolgt über mehrere Nuten, die die Freiräume 3 an einer Innenverzahnung 15 am Reibring 1 bilden. In diese Nuten 3 greifen zwei profilierte Befestigungsringen 4, 5, ein, die durch zwei Profilbleche gebildet sein können. Diese Befestigungsringe bzw. Profilbleche 4, 5 können beispielsweise durch Feinstanzen oder Laserschneiden kostengünstig hergestellt werden.

Die Befestigungsringe 4, 5 haben Vorsprünge 6, die in die Nuten 3 zwischen den Zähnen 16 des Reibringes 1 eingreifen. Das Bremsmoment wird vom Reibring auf die Befestigungsringe 4, 5 und von dort durch Formschluss unter Zuhilfenahme von mehreren als Schrauben ausgestalteten Verbindungselementen 7 übertragen. Die Schrauben 7 werden durch zugehörige Bohrungen bzw. Durchgangslöcher 8 im ersten Befestigungsring 4, sowie Bohrungen bzw. Durchgangslöcher 9 im Bremsscheibentopf 2 gesteckt und in entsprechenden Gewindebohrungen 10 im zweiten Befestigungsringe 5 verschraubt. Die Verschraubung kann alternativ auch durch separate Muttern (nicht dargestellt) realisiert werden, falls sowohl in den Zwischenstücken 4,5 als auch im Bremsscheibentopf 2 Durchgangsbohrungen 8, 9 ausgebildet sind.

Der Reibring 1 der Bremsscheibe wird durch einen die freie Durchgangsfläche beschreibenden inneren Durchmesser 11 am Reibring 1 und einen zugehörigen Außendurchmesser 12 am Bremsscheibentopf 2 zentriert. Dies gewährleistet die konzentrische Positionierung von Reibring 1 und Bremsscheibentopf 2 bezogen auf die Bremsscheibenachse.

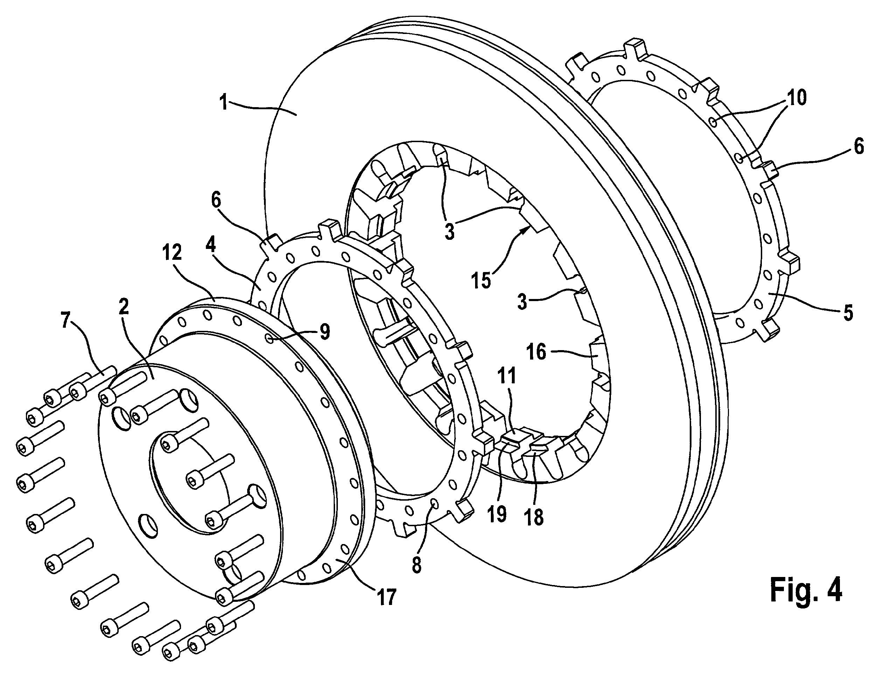

In Figur 4 sind die Reihenfolge von Tragteil 2 und Befestigungsring 4 vertauscht, so daß sich der umlaufende Ansatz 17 an die Außenfläche des Befestigungsringes 4 anlegt. Werden die Bauelemente in dieser Reihenfolge eingebaut, so ergibt sich zwar eine einfacher Montage bzw. Demontage wobei allerdings auf den Vorteil der oben beschriebenen Zentrierung verzichtet wird.

Die verwendeten Einzelkomponenten zur Verbindung des Reibrings 1 am Bremsscheibentopf 2 sind einfach und kostengünstig herstellbar und reduzieren damit den Kostenaufwand gegenüber bekannten mehrteiligen Bremsscheiben. Ferner ergibt sich eine leicht lösbare Reibringverbindung mit dem Bremsscheibentopf, so dass der Reibring bei Bedarf ohne großen Aufwand demontiert bzw. ausgewechselt werden kann.

## Patentansprüche

1. Bremsscheibe mit einem Reibring (1) und einem über Verbindungsglieder (4,5,7) mit dem Reibring (1) gekoppelten Tragteil (2), wobei das Tragteil (2) mit mindestens einem radial nach außen weisenden Ansatz (17) versehen ist, wobei der Reibring (1) , radial nach innen weisende, in Umfangsrichtung zueinander beanstandete Zähne besitzt (16) , wobei zu den Verbindungsgliedern mindestens ein Befestigungsring (4,5) gehört, der mit einer Seitenfläche an dem Reibring (1) angreift und wobei zu den Verbindungsgliedern weiterhin Verbindungselemente (7) gehören, die Befestigungsring (5), Ansatz (17) und Reibring (1) miteinander verbinden, **dadurch gekennzeichnet, daß** der Befestigungsring (5) sich axial an dem Reibring (1) oder den Zähnen abstützt und mit zumindest einem Vorsprung (6) versehen ist, welcher zur Übertragung tangentialer Kräfte zwischen Reibring (1) und Tragteil (2) zwischen zwei benachbarte Zähne (15) des Reibringes (1) eingreift.

2. Bremsscheibe nach Anspruch 1, **dadurch gekennzeichnet, daß** zwei Befestigungsringe (4,5) vorgesehen sind, die sich an entgegengesetzten Seiten des Reibringes (1) insbesondere dessen Zähnen (17) axial abstützen und daß die Verbindungsglieder (7) die beiden Befestigungsringe (4,5) und den Ansatz (17) miteinander verbinden.

3. Bremsscheibe nach Anspruch 1 **dadurch gekennzeichnet, daß** der Befestigungsring (5) mit mehreren über seinen äußeren Umfang verteilten sich radial nach außen erstreckenden Vorsprüngen (6) versehen ist, welche in die Freiräume (3) zwischen den Zähnen (16) der Bremsscheibe eingreifen.

4. Bremsscheibe nach Anspruch 2, **dadurch gekennzeichnet, daß** die beiden Befestigungsringe (4,5) mit über ihre Seitenflächen verteilten axialen Durchgangslöchern (9,10) versehen sind denen entsprechende Durchgangslöcher an dem um die Außenfläche des Tragteils umlaufenden Ansatz (17) zugeordnet sind und daß die Verbindungselemente (7) durch lösbare Schraubverbindungen gebildet sind, die durch die Durchgangslöcher (9, 10) und den Freiraum (3) zwischen den Zähnen (16) reichen.

5. Bremsscheibe nach Anspruch 2, **dadurch gekennzeichnet, daß** die über den Innenumfang der Bremsscheibe gleichmäßig verteilten Zähne (16) an ihren Seitenflächen jeweils mit einer Stufe (18) versehen sind, daß sich die Seitenflächen der Befestigungsringe an den radialen Wänden (19) der Stufen abstützen und durch die Verbindungselemente (7) gegenüber diesen Wänden in axialer Richtung verspannt werden.

6. Bremsscheibe nach Anspruch 5, **dadurch gekennzeichnet, daß** das Tragteil (2) im wesentlichen topfförmig ist, wobei der Außendurchmesser (12) des Topfes kleiner als oder ebenso wie der Innendurchmesser des ersten der beiden Befestigungsringe (4) ist, daß der Ansatz (17) an der Seitenfläche des Ringes (4) anschlägt und mit diesen verbunden ist.

7. Bremsscheibe nach Anspruch 6, **dadurch gekennzeichnet, daß** der Außendurchmesser (12) des umlaufenden Ansatzes (17) kleiner oder gleich der durch die inneren Enden (11) der Zähne (16) begrenzten kreisförmigen Durchgangsfläche ist, daß der Ansatz (17) etwa in der Mittelebene der Zähne (16) angeordnet ist und daß das bodenseitige Ende des topfförmigen Tragteils (2) durch den Innendurchmesser des ersten Befestigungsringes (4) axial nach außen ragt.

8. Bremsscheibe nach Anspruch 7, **dadurch gekennzeichnet, daß** die freien Enden der Zähne (16) im wesentlichen tangential verlaufende Endflächen (11) besitzen, die an die Außenfläche (12) des Ansatzes angrenzen.

9. Bremsscheibe nach Anspruch 2, **dadurch gekennzeichnet, daß** das Tragteil (2) mit einem der Befestigungsringe (4,5) einstückig verbunden ist.

10. Bremsscheibe nach Anspruch 4, **dadurch gekennzeichnet, daß** die Durchgangslöcher (10) eines der Befestigungsringe (5) als Gewinde für die lösbaren Schraubverbindungen (7) ausgestaltet sind.
